Europäisches Patentamt

European Patent Office

Office européen des brevets

(19)

(11) Publication number: 0 400 514
A1

## (12) EUROPEAN PATENT APPLICATION

(21) Application number: 90110045.3

(22) Date of filing: 28.05.90

(51) Int. Cl.5: **F22B 1/28, F16J 13/24, B65D 51/00**

(30) Priority: 30.05.89 IT 350089

(43) Date of publication of application:
05.12.90 Bulletin 90/49

(84) Designated Contracting States:
AT BE CH DE ES FR GB GR IT LI LU NL

(71) Applicant: PIETRO FOGACCI S.r.l.
Via del Sostegno 2
I-40131 Bologna(IT)

(72) Inventor: Cau, Giuliano
Via Masserenti 34
I-40013 Castel Maggiore Bologna(IT)

(74) Representative: Modiano, Guido et al
MODIANO, JOSIF, PISANTY & STAUB
Modiano & Associati Via Meravigli, 16
I-20123 Milano(IT)

(54) **Safety closure for pressurized containers.**

(57) The safety closure for pressurized containers (4) is constituted by an outer manual grip body (1) and by an inner sleeve (2) which internally accommodates an overpressure valve, and is improved by providing the execution of the sleeve (2) in two elements (6, 7) which are sealingly arranged inside one another, and wherein the outer element is freely rotatable within the manual grip body (1) and can be screwed to a threaded end of a tubular feeding duct (3) of the pressurized container (4), and the inner element (7), which accommodates the overpressure valve (5), is axially slidable with respect to the outer element (6) between a lowered position, in which it is rotationally coupled with the outer element (6) and with the manual grip body (1), and a raised position, in which it is rotationally free with respect to the outer element (6).

FIG 2

EP 0 400 514 A1

## SAFETY CLOSURE FOR PRESSURIZED CONTAINERS

The present invention relates to a safety closure for pressurized containers, in particular for boilers of steam irons.

As is known, the pressure reached by steam inside said boilers can reach high and dangerous values which might even lead to the destruction of the boiler or of the ducts which lead to the iron.

In order to prevent the pressure from reaching such values, overpressure valves are used which connect the boiler to the atmosphere when a preset limit pressure value is reached.

Due to reasons of economy and practicality, the closure normally used to close a duct for feeding water to the boiler is provided with the overpressure valve.

This arrangement also allows the rapid replacement of the valve if it no longer satisfies the necessary safety requirements.

With this valve, however, one does not consider the fact that, when the boiler is opened to fill it, said boiler may still internally contain steam at a pressure which is not sufficient to activate the valve but is, at the same time, capable of violently striking the person who opens the boiler closure.

Naturally it is not possible to set said valve for such a low pressure value as to avoid this disadvantage, since in this case the boiler would not be able to reach the optimum operating pressure value and would continuously vent into the atmosphere.

The aim of the present invention is therefore to solve the above described problem by providing a safety closure which is provided with the overpressure valve and which can prevent its own opening in the presence of steam even at low pressure and thus prevent possible accidents caused by haste in opening the boiler.

Within the scope of this aim, a further object of the present invention is to provide a safety closure which is simple in concept, safely reliable in operation and versatile in use.

This aim and this object are both achieved, according to the invention, by the present safety closure for pressurized containers, of the type constituted by a manual grip body which is axially hollow and closed upward and by a sleeve which is arranged coaxially inside said manual grip body, is coupled therewith and which can be screwed on a threaded end of a tubular duct for feeding a liquid to said container, said sleeve accommodating, inside it, an overpressure valve which vents into the atmosphere, characterized in that said sleeve is constituted by two elements which are arranged coaxially and sealingly one inside the other with the possibility of rotating and translating with respect to one another; said outer element being screwable on said threaded end of the tubular duct of the container and being connected with said manual grip body with the possibility exclusively of rotating about its axis with respect to said manual grip body; said internal element being connectable with said manual grip body, with the possibility exclusively of translating axially with respect to said manual grip body, and accommodating said overpressure valve; said inner element being axially movable with respect to said outer element between a lowered position, in which it is rigidly rotationally coupled to said outer element and to said manual grip body, and a raised position, in which it is rotationally free with respect to said outer element; adjustable contrast means being provided to oppose the lifting action exerted on said inner element by the pressurized fluid which is present within said container.

The details of the invention will become apparent from the detailed description of a preferred embodiment of the safety closure for pressurized containers, illustrated only by way of non-limitative example in the accompanying drawings, wherein:

figure 1 is an axial sectional view of the safety closure according to the invention in the configuration which allows the opening and closing of the container with which said closure is associated;

figure 2 is the same axial sectional view of the closure in its safety configuration;

figures 3 and 4 are corresponding axial sectional views of a different embodiment of the safety closure.

With particular reference to the above figures, the closure, generally indicated by the reference numeral 21, is constituted by a manual grip body 1 which is internally hollow and closed upwardly, and by a sleeve 2 which is arranged inside it. The sleeve 2 can be screwed to the threaded end of a tubular feeding duct 3 for feeding to the pressurized container 4.

According to the present invention, the sleeve 2 is made of two parts or elements, respectively indicated by 6 and 7, which are arranged coaxially and sealingly inside one another with the possibility of rotating and translating axially with respect to one another.

The outer element 6 can be screwed on the threaded end of the tubular duct 3 of the container 4 and is connected with the manual grip body 1 with the possibility exclusively of rotating about its axis with respect to said body.

The inner element 7 can in turn be connected to the manual grip body 1 with the possibility exclusively of translating axially with respect to said body. The inner element 7 furthermore internally contains an overpressure valve 5.

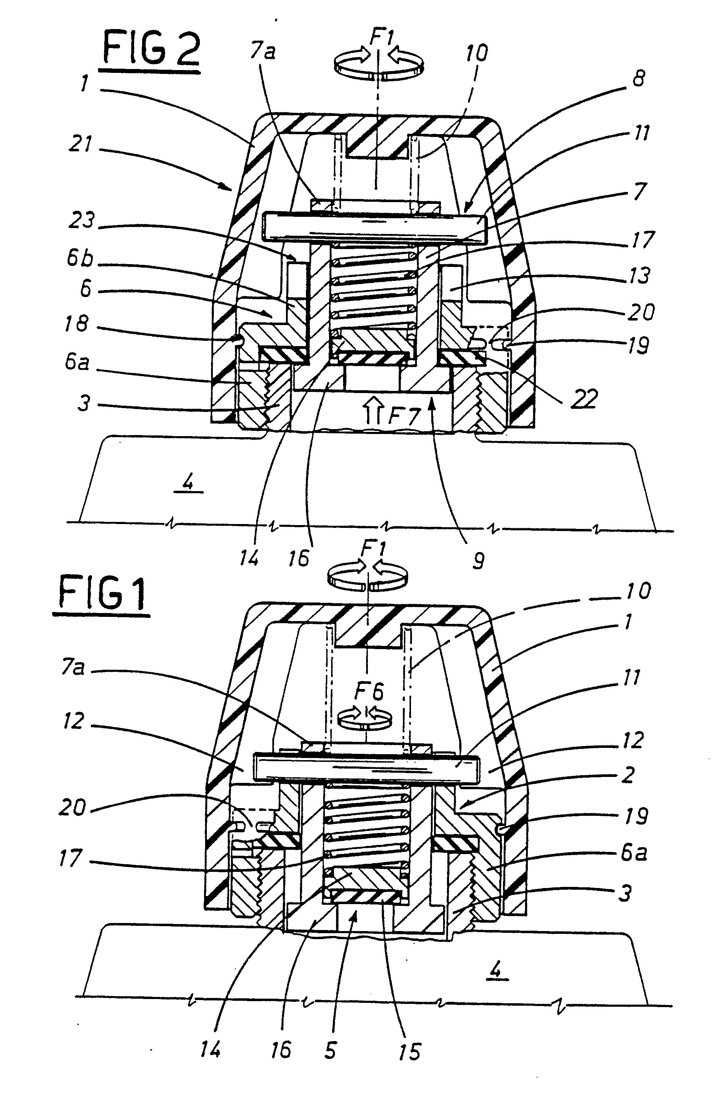

The inner element 7 is furthermore axially movable with respect to the outer element 6 between a lowered position, in which it is rigidly rotationally coupled to the outer element 6 and to the manual grip body 1 (see figure 1), and a raised position, in which it is rigidly rotationally coupled to the manual grip body 1 and is rotationally free with respect to said outer element 6 (see figure 2).

Adjustable contrast means 10 are adapted to act on the inner element 7 and can oppose the lifting action exerted by the pressurized fluid which is present within the container 4.

In the embodiment illustrated in figures 1 and 2, the outer element 6 has two consecutive and ·coaxial portions 6a and 6b, the upper one whereof, indicated by 6b, has a smaller inner diameter and acts as support and sealing guide for the inner element 7. Said inner element has, in a downward position, an annular raised projection 9 which is directed outward and is intended to abut against a sealing gasket 22 which is arranged within the portion 6a.

The inner element 7 is axially hollow and contains, starting from an inner raised projection 16 which forms an abutment, a sealing gasket 15, a piston 14 and elastic means such as a spring 17. The piston 14 is loosely accommodated inside the inner element 7 and can slide freely along it. The gasket 15, the piston 14 and the spring 17 constitute the overpressure valve 5.

At its upper end 7a, the inner element 7 has means 8, constituted by a dowel 11, adapted to rotationally couple it to the body 1; said dowel passes through the inner element 7 and its opposite ends are accommodated within respective seats 12 which are defined internally and longitudinally in the manual grip body 1. The dowel 11 can slide freely along the respective seats 12 and thus allows the inner element 7 to slide axially with respect to the body 1. The same dowel 11 also acts as abutment for the spring 17 which thus keeps the gasket 15 pressed against the edge of the annular raised projection 16 of the inner element 7.

The outer element 6 is provided, in an upward position, with a plurality of longitudinal teeth 23 which define an equal number of radial seats 13 for accommodating the dowel 11.

The outer element 6 is coupled to the manual grip body 1 by virtue of means with an annular seat 18 and a corresponding raised projection 19 which allow the manual grip body 1 to be rotationally free with respect to the outer element 6 but axially fixed with respect thereto. In the embodiment of figures 1 and 2, the seat 18 has been defined directly on the outer element 6, whereas the raised projection 19 is internally provided in the manual grip body 1; the reference numeral 20 furthermore indicates openings or groves for outward venting.

In the embodiment so far illustrated, the contrast means 10 have been represented by a spring interposed between the manual grip body 1 and the dowel 11; said contrast means can however be simply constituted by the weight of the inner element 7 itself and by the other elements which are axially associated therewith.

The operation of the described closure is easily understandable, starting from figure 1, wherein the inner element 7 is lowered and the dowel 11 therefore engages both within the seats 13 of the outer element 6 and within the seats 12 of the body 1. In this configuration, by rotating the body 1 according to the arrow F1, it is possible both to screw and unscrew the outer element 7 on the duct 3 according to the arrow F6.

Once the closure 21 is screwed, as soon as the value of the pressure inside the container 4 exceeds the value which corresponds to the thrust exerted by the contrast means, be they the spring 10 or merely the weight of the inner element 7, the latter is lifted until the dowel 11 exits from the respective seats 13 of the outer element 6 (see arrow F7 of figure 2). It should be noted that in this step the valve 5 is closed and the inner element 7 is sealingly movable with respect to the outer element 6.

In this second configuration, the body 1 can rotate freely according to the arrow F1 together with the inner element 7 alone, which is rotationally free with respect to the outer element 6 which therefore remains firmly screwed to the duct 3.

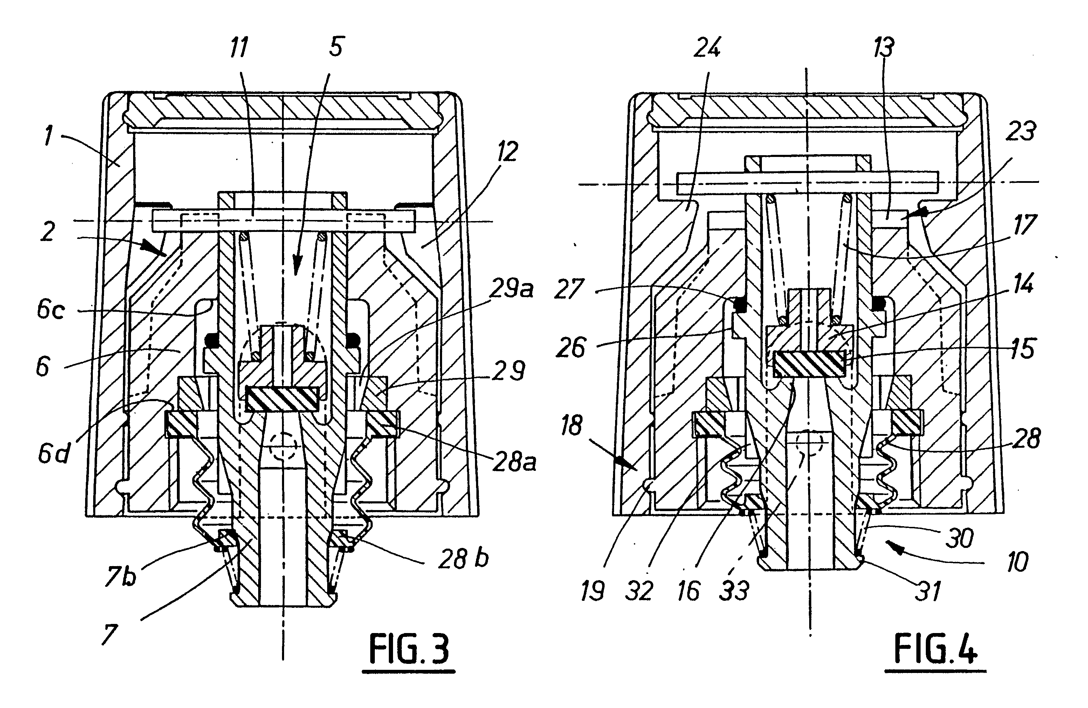

Figures 3 and 4 illustrate a different embodiment of the safety closure. In particular, in said closure the inner element 7 of the sleeve 2 has an elongated shape so as to extend downward below the outer element 6; said inner element 7 has a differentiated internal diameter so as to define, in a central position, the annular raised projection 16 for the abutment of the overpressure valve 5.

The dowel 11 which passes through the inner element 7 at the top 7a is suitable for engaging, with its opposite ends, the seats 12 defined by radial wings 24 provided on the inner surface of the body 1; the wings 24 extend in practice at the upper portion 6b of the outer element 6. Therefore the dowel 11 is engaged within the seats 12 when the inner element 7 is lowered (see figure 3), whereas it is free when the inner element 7 is raised (see figure 4). In this second position, the body 1 is rotationally free with respect to the sleeve 2 and therefore the closure cannot be opened.

In the embodiment of figures 3 and 4, the seat 18 which rotationally associates the body 1 with the sleeve 2 is defined on the inner surface of said body 1, whereas the outer element 6 has the corresponding raised projection 19. Above the seat 18, the body 1 furthermore has a further annular raised projection 25 by means of which it is guided on the outer element 6.

On the outer surface, the inner element 7 defines, in a central position, an annular raised projection 26 which acts as abutment for a sealing gasket 27. The gasket 27 is suitable for abutting, in the raised position of the inner element 7, against the inner shoulder 6c defined by the upper portion 6b of the outer element 6 with respect to the lower portion 6a.

A preferably bellows-shaped tubular gasket 28 is accommodated between the outer element 6 and the inner element 7 of the sleeve 2 in the lower portion of said elements. The gasket 28 has an upper head 28a which is directed outward and a lower head 28b which is directed inward. The upper head 28a is accommodated on the inner surface of the outer element 6, whereas the lower head 28b is elastically in contact with a conical portion 7b of the outer surface of the inner element 7.

In particular, the upper head 28a is in contact, for a large portion, with a crown 29 which is accommodated in a seat which is defined flush to a shoulder 6d of the outer element 6; the remaining part of the head 28a rests on said shoulder 6d. The crown 29 has angularly distributed notches 29a.

The upper end of a conical spring 30 rests on the lower head 28b of the gasket 28 and abuts, at its lower end, with a lip 31 of the inner element 7. Besides ensuring the contact of the head 28b on the conical portion 7b of the element 7 in normal conditions, the spring 30 also defines said contrast means 10 suitable for opposing the lifting action exerted on the inner element 7 by the pressurized fluid which is present inside the container.

At the bellows-like gasket 28, the inner element 7 is externally provided with radial teeth 32 which are intended to limit the region of contact between said gasket 28 and said element 7. The outer element 6 furthermore has a hole 33 in communication with the outside for venting air during the closing of the closure.

The bellows-like gasket 28 has the function of preventing the escape of jets of water toward the outside through the interspace between the elements 6 and 7 of the sleeve 2 before the operating pressure determines the sealed coupling between said elements 6 and 7. Naturally, the possible absence of the gasket 28 does not compromise in any case the operation of the inner element 7 as described above.

The bellows-like gasket 28 furthermore allows pressure re-equilibrium during the cooling of the boiler; such cooling in fact tends to produce a significant negative pressure inside the boiler which can be a possible cause of damage. In this case the gasket 28 separates from the inner element 7 due to said negative pressure.

In the practical embodiment of the invention, the materials employed, as well as the shape and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Safety closure for pressurized containers, of the type constituted by a manual grip body (1) which is axially hollow and closed upwardly, and by a sleeve (2) which is arranged coaxially inside said manual grip body (1), is coupled therewith and which can be screwed on a threaded end of a tubular duct (3) for feeding a liquid to said container (4), said sleeve (2) accommodating, inside it, an overpressure valve (5) which vents into the atmosphere; characterized in that said sleeve (2) is made of two elements (6,7) which are arranged coaxially and sealingly one inside the other with the possibility of rotating and translating with respect to one another; said outer element (6) being screwable on said threaded end of the tubular duct (3) of the container (4) and being connected with said manual grip body (1) with the possibility exclusively of rotating about its axis with respect to said body; said inner element (7) being connectable with said manual grip body (1), with the possibility exclusively of translating axially with respect to said body, and accommodating said overpressure valve (5); said inner element (7) being axially movable with respect to said outer element (6) between a lowered position, in which it is rigidly rotationally coupled to said outer element (6) and to said manual grip body (1), and a raised position, wherein it is rotationally free with respect to said outer element (6); adjustable contrast means (10) being provided to oppose the lifting action exerted on said inner element (7) by the pressurized fluid present within said container (4).

2. Closure according to claim 1, characterized in that between said inner element (7) and said manual grip body (1) there are means (8) suitable for rotationally coupling said element and said body, said means being constituted by a dowel (11) which transversely crosses the upper end (7a) of said inner element (7) and is suitable for engaging in a freely slidable manner, with its opposite ends, respective seats (12) defined inside said grip body (1), said outer element (6) having a plurality of longitudinal teeth (23) which define further radial seats (13) for accommodating said dowel (11) when said inner element (7) is in its lowered position.

3. Closure according to claim 1, characterized in that said overpressure valve (5) is constituted by a piston (14) which is loosely axially slidable within said inner element (7) until it abuts downward, with the interposition of a respective sealing abutment gasket (15), against an inner annular raised projection (16) of said inner element (7), elastic means (17) being provided and being interposed between said piston (14) and said dowel (11).

4. Closure according to claim 1, characterized in that said outer element (6) is axially coupled to said manual grip body (1) by virtue of means with an annular seat (18) and a corresponding raised projection (19) which are affected by at least one opening or groove (10) for pressure venting.

5. Closure according to claim 1, characterized in that a tubular gasket (28) is provided between said outer element (6) and said inner element (7),. said gasket having an upper head (28a) which is accommodated on the inner surface of the outer element (6) and a lower head (28b) which is elastically in contact with a conical portion (7b) of the outer surface of the inner element (7).

6. Closure according to claim 5, characterized in that said upper head (28a) of the gasket (28) is in contact with a crown (29) which is accommodated in a seat defined at a shoulder (6d) of said outer element (6).

7. Closure according to claim 5, characterized in that the upper end of elastic means (30) rests on said lower head (28b) of the gasket (28), said elastic means abutting, at the lower end, with a lip (31) of said inner element (7), said elastic means (30) providing said contrast means (10) suitable for opposing the lifting action exerted on the inner element (7) by the pressurized fluid which is present within the container (4).

8. Closure according to claim 2, characterized in that said dowel (11) is adapted to engage, with its opposite ends, respective seats (12) defined by radial wings (24) which are defined on the inner surface of said body (1) and extend at the upper portion (6b) of said outer element (6), said dowel (11) engaging within said seats (12) when the inner element (7) is lowered and being instead free when said inner element (7) is raised.

9. Closure according to claim 1, characterized in that said inner element (7) externally defines an annular raised projection (26) which acts as abutment for a sealing gasket (27) which is adapted to abut, in the raised position of said inner element (7), against an internal shoulder (6c) defined between a lower portion (6a) and an upper portion (6b) of said outer element (6).

FIG 2

FIG 1

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-163006 (BAYERISCHE MOTOREN WERKE) <br> * page 4, line 21 - page 8, line 20; figures * <br> --- | 1 | F22B1/28 <br> F16J13/24 <br> B65D51/00 |
| A | FR-A-1600373 (USINES CHAUSSON) <br> * page 4, line 19 - page 5, line 13; figures * <br> --- | 1 | |
| A | FR-A-2539435 (CAVALLI) <br> * page 8, line 15 - page 9, line 13; figures * <br> --- | 1 | |
| A | US-A-3587912 (KAZUHIRO OHTA) <br> ----- | | |

**TECHNICAL FIELDS SEARCHED (Int. Cl.5 )**

F22B
F16J
B65D
A47J
F01P

The present search report has been drawn up for all claims

| Place of search | Date of completion of the search | Examiner |
|---|---|---|
| THE HAGUE | 04 SEPTEMBER 1990 | VAN GHEEL J.U.M. |

EPO FORM 1503 03.82 (P0401)